# EUROPEAN PATENT SPECIFICATION

(11) **EP 1 986 415 B1**
(45) Date of publication and mention of the grant of the patent: **22.09.2010**
(21) Application number: 08006522.0
(22) Date of filing: 31.03.2008
(51) Int. Cl.: H04N 1/56

(54) **Image processing device and image processing method**
Bildverarbeitungsvorrichtung und Bildverarbeitungsverfahren
Procédé et dispositif de traitement d'images

(30) Priority: 24.04.2007 JP 2007113915
(43) Date of publication of application: 29.10.2008
(73) Proprietor: Murata Machinery, Ltd., Minami-ku Kyoto-shi Kyoto 601-8326 (JP)
(72) Inventor: Nishioka, Naoki, Kyoto-shi Kyoto 612-8686 (JP)
(74) Representative: Schoppe, Fritz

(56) References cited:
- US-A- 5 805 970
- US-A1- 2003 118 232
- US-A1- 2004 042 680

## Description

### BACKGROUND OF THE INVENTION

### 1. Field of the Invention

The present invention relates to an image processing device and an image processing method capable of judging whether a background color of a scanned document is color, gray, or blank page.

### 2. Description of the Related Art

Recently, an image processing device having an automatic color select (ACS) function of scanning a document and judging whether the document is a monochrome image or a color image has been proposed. Although a pre-scan is ideally performed to reliably perform the ACS, problems in that the scanning time becomes longer by the pre-scan, and the pre-scan cannot be adopted in an automatic document feeder (ADF) arise.

A technique of once storing the image data of the document in a memory and judging whether the document is a monochrome image or a color image from the stored image data (for one page) is proposed.

A technique of judging whether the document is a monochrome image or a color image from an image signal of a head line of the document, and performing the image processing corresponding thereto is also proposed.

In the technique of once storing the image data of the document in the memory the judgment accuracy becomes high but a large-capacity memory is necessary since judgment on whether the document is a monochrome image or a color image is made based on one whole page of the document. The memory capacity may be small in the technique of judging whether the document is a monochrome image or a color image from the image signal of the head line, but the head line often does not reflect the entire document and then judgment may not be possible. In particular, if the document has a background color, identification of the image becomes difficult unless an appropriate image processing is performed.

US 2003/118232 A1 describes a background detection process that analyzes background information for the purpose of limiting the impact of intensity information obtained from non-document areas. The process includes identifying a first white peak from pixels within a first document region; identifying a second white peak from pixels within a second document region; determining if the first white peak was identified using image data from outside of the input document; and if so, identifying a third white peak from pixels within the first document region based on the second white peak.

US-A-5,805,970 describes a document size detecting device employed in an image forming apparatus for accurately detecting a document size by using two threshold values. The detecting device uses one threshold for a monochrome document, and the other for a color document, or it uses both the thresholds alternately depending on the number of scanning lines completed by an image sensor.

US 2004/042680 A1 describes a method for enhancing electronic images of a document, in which the electronic images contain a background with foreground markings. The method includes receiving an electronic image containing pixels and assigning an initial provisional foreground/background status to the pixels. The initial foreground/background estimate is revised and a determination is made as to whether the revised foreground/background estimate is to be the final status assignment for the pixels of the image. If a final pixel status assignment has not been achieved, the estimate is again revised until a final foreground/background status is reached for the image pixels prior to creation of an output image.

### SUMMARY OF THE INVENTION

It is an object of the present invention to provide a technique of judging the background color of the document and performing a process corresponding to the judgment result without increasing the memory capacity.

This object is achieved by a device of claim 1, and by a method of claim 8.

In order to overcome the problems described above, a first aspect of the present invention relates to an image processing device including a scanning unit for scanning a document; a memory unit for storing a threshold necessary for background color judgment of the document scanned by the scanning unit; a judgment unit for judging a background color of the document based on the threshold stored in the memory unit; an image processing unit for performing subsequent image processing according to a judgment result of the judgment unit; a threshold resetting unit for resetting the threshold prior to the image processing when the judgment result of the judgment unit is not determinable; and a re-judgment unit for re-judging the background color.

In a second aspect of the present invention, the judgment unit judges the background color of the document in a first area defined in advance along a sub-scanning direction of the scanning unit, and the re-judgment unit re-judges the background color in a second area defined in advance along the sub-scanning direction of the scanning unit when the result is not determinable.

In a third aspect of the present invention, an informing unit for detecting that the judgment unit has first judged as not determinable, and informing a user of the image processing device is further arranged.

In a fourth aspect of the present invention, the informing unit informs the user of the image processing device as not determinable if judgment is not possible even after a predefined time has elapsed from when first judged as not determinable by the judgment unit.

In a fifth aspect of the present invention, the informing unit informs the user of the image processing device if judgment is not possible even after a predefined number of areas is processed by the judgment unit.

In a sixth aspect of the present invention, the background color to be judged by the judgment unit is one of color, gray, of blank. "Blank" refers to a blank white paper or colored paper.

According to the first aspect of the present invention, the background color of the document is judged, the threshold is reset prior to image processing when the judgment result is not determinable, and re-judgment is performed, whereby the background color of the document can be judged without increasing the memory capacity and performing the pre-scan and the like, and the process corresponding to the judgment result can be performed.

According to the second aspect of the present invention, the background color of the document is judged in the first area and when the judgment result is not determinable, the background color is re-judged in the second area, whereby the background color can be judged without increasing the memory capacity and performing the pre-scan and the like. The judgment can be made in a shorter period of time compared to a case of setting the area along a main scanning direction of the scanning unit.

According to the third aspect of the invention, the user of the image processing device is informed after detecting that the judgment unit has first judged as not determinable, and thus the user can be alerted when a document which background color is hard to judge is scanned.

According to the fourth aspect of the present invention, the informing unit informs the user of the image processing device when judgment is not possible even after a predefined time has elapsed after the judgment unit has first judged as not determinable, and thus the user is rapidly alerted when a document which background color is hard to judge is scanned.

According to the fifth aspect of the present invention, the user of the image processing device is informed when judgment is not possible even after the predefined number of areas are processed by the judgment unit, and thus the user is rapidly alerted when a document which background color is hard to judge is scanned.

According to the sixth aspect of the present invention, the background color to be judged by the judgment unit is one of color, gray, or blank, and thus the image processing corresponding to each background color can be performed.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

Fig. 1 is a perspective view of a copy machine according to a first embodiment of the present invention;

Fig. 2 is a block diagram of a configuration of the copy machine;

Fig. 3 is a block diagram of an image processing unit.

Fig. 4 is a view showing a range of document to be processed by the image processing unit;

Fig. 5 is a histogram created by the image processing unit;

Fig. 6 is a histogram created by the image processing unit;

Fig. 7 is a view showing a hue mask;

Fig. 8 is a view showing a division table of a area;

Fig. 9 is a view showing a background color mask;

Fig. 10 is a view showing a zero area mask;

Fig. 11 is a flowchart of a procedure for judging the type of image; and

Fig. 12 is a flowchart of a procedure for judging the type of image.

### DETAILED DESCRIPTION OF THE INVENTION

### <First embodiment>

A copy machine will be described, by way of example, as an image processing device according to a first embodiment of the present invention with reference to the drawings.

### <Configuration>

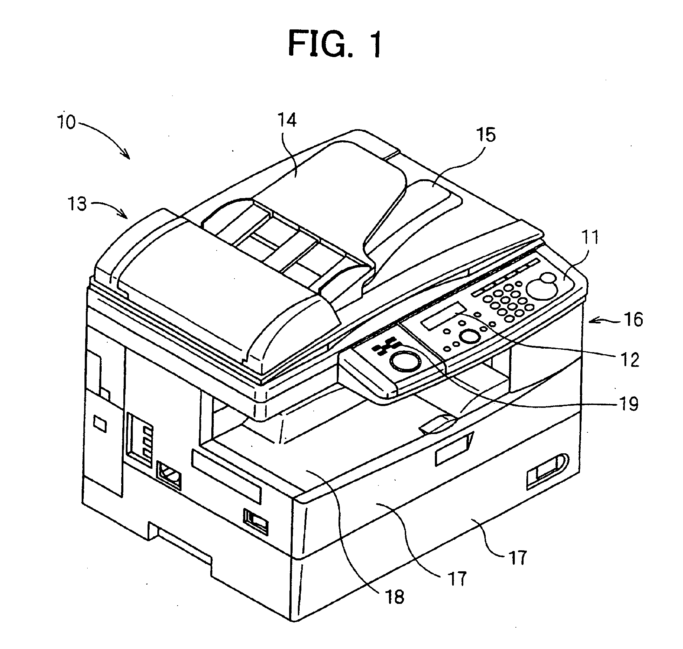

Fig. 1 is a perspective view showing a copy machine 10 according to the first embodiment of the present invention. The copy machine 10 generates image data by scanning a document, and prints an image on a recording paper based on the image data. Only elements and/or functions related to the present invention are shown in the following figures including Fig. 1. YCbCr colorimetric system will be used herein for the colorimetric system, but is not limited thereto, and other colorimetric systems such as L*a*b* colorimetric system may be applied.

An operation unit 11 includes a numeric keypad, and a mechanical switch of various function keypads necessary for operating the copy machine 10. The operation unit 11 accepts various commands to scan, copy, etc. the document when the user operates the keypads.

A display unit 12 is a typical display configured by a display device such as liquid crystal display (LCD), and displays various information on a screen as images. A touch screen may be applied to the display unit 12 to be also provided with the function of one part of or the entire operation unit 11.

A scanning unit 13 sequentially scans the document placed on a document tray 14 including an Automatic Document Feeder (ADF) with an image pickup device such as a charge coupled device (CCD) line sensor (not illustrated), and generates image data based on the image recorded on the document. The scanned document is output to a document output tray 15. The document does not necessarily need to be scanned by the ADF and may be scanned by the Flat Bed Scanner (FBS) method. The FBS method is a method of executing the scanning procedure of scanning the document placed on a document glass (not illustrated) with the image pickup device, and discharging the document which scanning is completed.

A printing unit 16 is a printer device of electrophotographic method etc. which prints out the image data generated by the scanning unit 13 as a hard copy. Specifically, although not illustrated, the toner supplied from a toner cartridge is attached to a photosensitive drum based on the image data. The toner is then transferred to a recording paper conveyed from a recording paper cassette 17 by a recording paper conveying unit, and the transferred recording paper is output to a paper output tray 18. The image data recorded by the printing unit 16 does not necessarily need to be the image data generated by the scanning unit 13, and may be image data received through a communication network if the copy machine 10 is connected to the communication network.

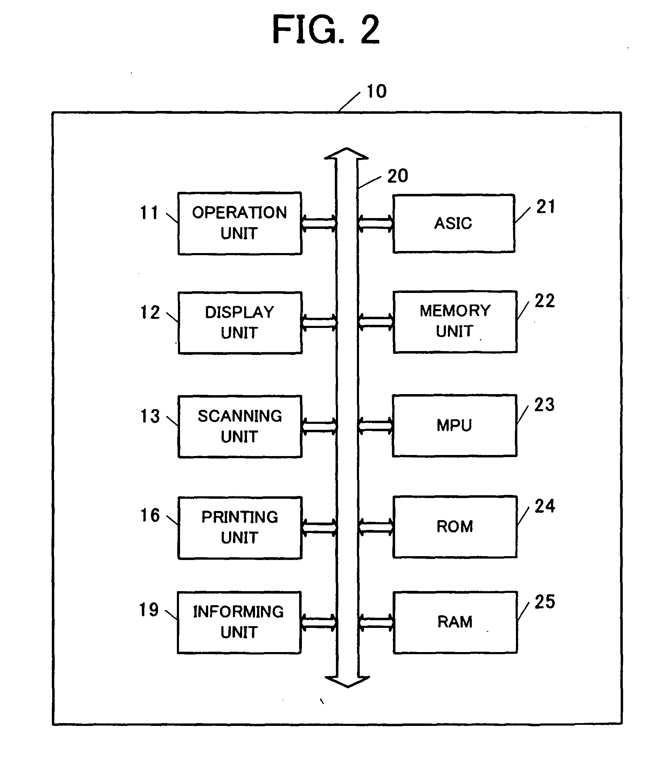

An informing unit 19 detects that an Application Specific Integrated Circuit (ASIC) 21 (see Fig. 2) has first judged the background color of the document as not determinable, and informs the same to the user of the copy machine 10. Specifically, a speech synthesis unit (not illustrated) may be applied, so that speech is output according to a control from a micro processing unit (MPU) 23, to be hereinafter described. The fact that the judgment of the background color by the ASIC 21 is not determinable may be displayed on the display unit 12. The informing unit 19 may include both the speech synthesis unit and the display unit 12, or may include only one of the above.

Fig. 2 is a block diagram showing a configuration example of the copy machine 10. Each component described above is electrically connected by way of a bus 20, and is also electrically connected to the following components.

The ASIC 21 has an ACS function of judging whether the background color of the image data generated by the scanning unit 13 is color, monochrome, gray, or blank, and performs a predetermined process based on the judgment result. In other words, the ASIC 21 corresponds to a judgment unit and an image processing unit of the present invention. When the judgment result is not determinable, the ASIC 21 rewrites the threshold etc. stored in a memory unit 22, that is, performs resetting, and performs re-judgment. The detailed processing content of the ASIC 21 will be hereinafter described in detail.

The memory unit 22 is a rewritable memory which stores thresholds necessary for judging the background color of the document scanned by the scanning unit 13. The threshold is a value etc. associated with a second background color threshold, minimum number of counts for judging the background color, and type and size of a hue mask. The detailed description thereof will be hereinafter described in detail. The mask refers to a area in a color space that is judged as achromatic even if it is chromatic.

The MPU 23 performs control of an input signal such as a command from the operation unit 11, data calculation based on the input signal, generation of an output signal, display content on the display unit 12, as well as of the scanning unit 13, the printing unit 16, the informing unit 19, and the ASIC 21. A read only memory (ROM) 24 stores programs to be executed by the MPU 23 and data necessary for the control. A random access memory (RAM) 25 temporarily stores data necessary for the control by the MPU 23. Various functions of the copy machine 10 are thereby realized. That is, the MPU 23 controls each component of the copy machine 10 in cooperation with the ROM 24 and the RAM 25.

### <Processing content of image processing unit>

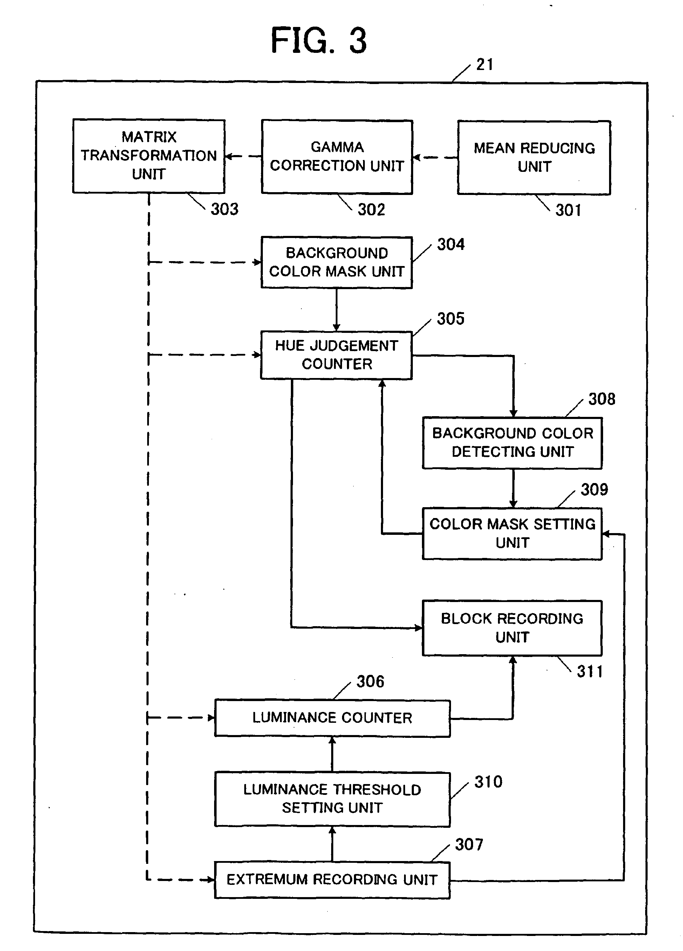

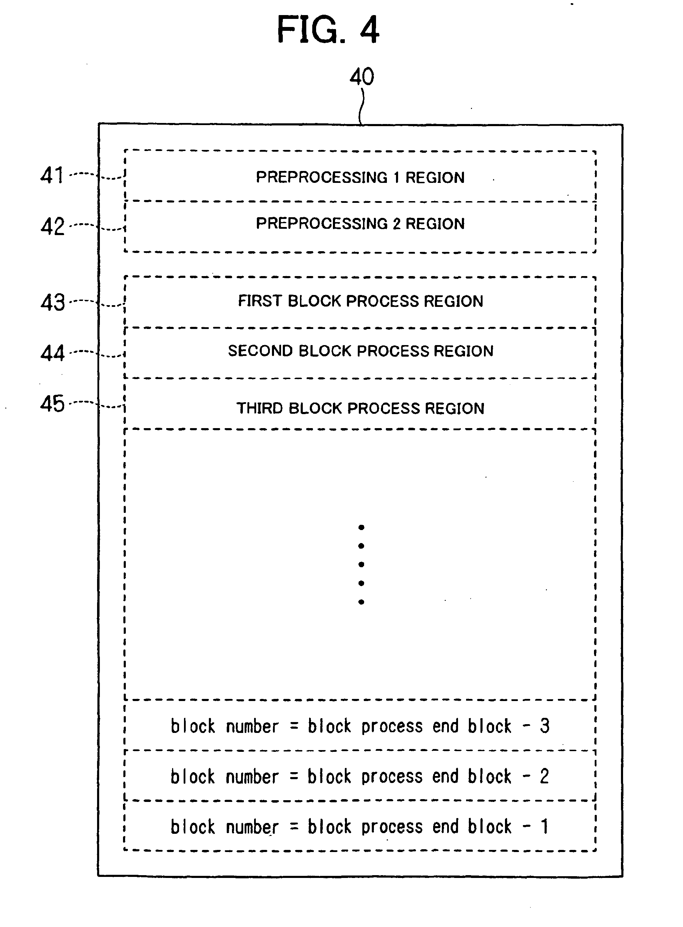

Fig. 3 is a block diagram showing the ASIC 21, and Fig. 4 shows an example of a range of document to be processed by the ASIC 21. A short side direction of the document 40 is a main scanning direction (arraying direction of the CCD line sensor) of the scanning unit 13, and a long side direction is a sub-scanning direction (direction perpendicular to the arraying direction of the CCD line sensor). The ASIC 21 divides the document 40 represented by the image data generated by the scanning unit 13 to a plurality of areas defined in advance, and executes the process corresponding to each area.

In the ACS function of the ASIC 21, a mean reducing unit 301 first obtains an average of gradation values of a target pixel and the pixels on the right, the lower right and below of the target pixel, and substitutes the same to the pixels of after transformation. Subsequently, a gamma correction unit 302 adjusts the ratio of change in voltage equivalent with respect to change in brightness of the image. If the document is expressed by RGB colorimetric system such as a case where the document is scanned with the color CCD, a matrix transformation unit 303 transforms the RGB colorimetric system to the YCbCr colorimetric system. The ASIC 21 is in the following processing state after the execution of the above, and performs the following processes in cooperation with a background color mask unit 304 to a block recording unit 311. A hue judgment unit 305, a luminance counter 306, an extremum recording unit 307, and a background color detecting unit 308 cooperate to execute the function of the judgment unit.

The block recording unit 311 executes the function of the judgment unit. Furthermore, a color mask setting unit 309 and a luminance threshold setting unit 310 cooperate to execute the function of the setting unit of the present invention. (1) Preprocessing 1: Presence of background color of the document, and area in a color difference plane of the relevant background color as well as area of luminance are judged in a preprocessing 1 area 41. (2) Preprocessing 2: If the judgment result is determined as background color document in the preprocessing 1, the threshold to be used in the block process is judged in a preprocessing 2 area 42. (3) Block process: In response to the result obtained in preprocessing 1 and preprocessing 2, judgment is made on whether the scanned image is color, monochrome, gray, or blank.

The color image referred to herein does not include a case where only the background color is chromatic. (4) Recording of image judgment data: Following data is recorded to judge the type of image data by software. (a) Record judgment of background color and area in CbCr color difference plane; (b) record maximum value and minimum value of YCbCr in a background color area; (c) record total luminance counter value in each luminance area; (d) record total color counter value in each color area; (e) record color block number and color judgment area in the block process; and (f) record gray block number and gray judgment area in the block process.

The background color judgment of color is performed in the preprocessing 1 and the preprocessing 2. The background color judgment of color is independent from the background color judgment of luminance, where the relevant area is judged as the background color area when the following conditions are satisfied. (1) Number of counts of one area exceeds a first background color judgment threshold in preprocessing 1; and (2) sum of the number of counts of the adjacent area exceeds a second background color judgment threshold.

The first background color judgment threshold is a threshold at a time of judging the number of counts of one area as the background color, and the second background color judgment threshold is a threshold at a time of judging the sum of the number of counts of the adjacent area as the background color. The adjacent area may be adjacent in any direction.

The background color judgment of color uses a chromatic mask of preprocessing in preprocessing 1 and preprocessing 2, and the judgment of background color is validated in the block process to apply the selected mask. The mask for block process includes two types of hue mask and background color mask, where the range of mask is extended with respect to the range of background color detected in the preprocessing 1 and the preprocessing 2 in either mask. A value obtained by adding a margin of each hue to either mask is used in the block process regardless of the presence of the background color judgment.

Specifically, in the preprocessing 1 area 41 and the preprocessing 2 area 42, the hue judgment counter 305, the luminance counter 306, and the extremum recording unit 307 cooperate to judge whether the document 40 is chromatic or achromatic. If the document 40 is achromatic, the luminance counter 306 extracts and counts the luminance of the document and creates a histogram. If the document is chromatic, normal color image processing is performed.

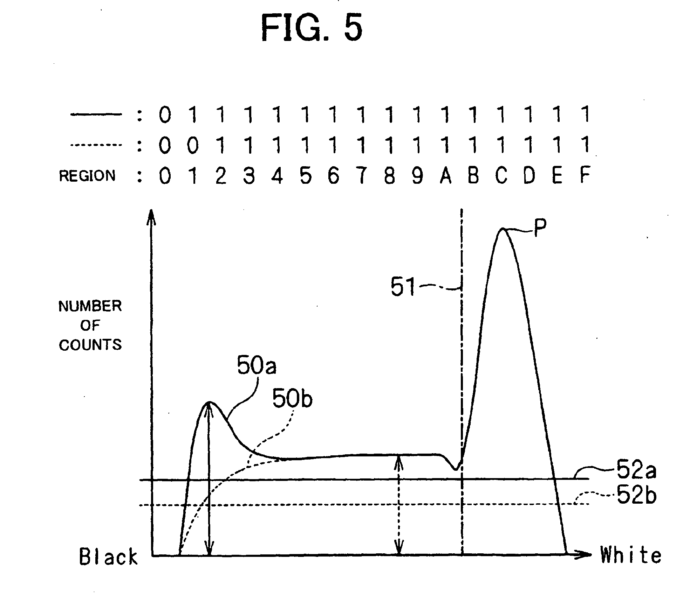

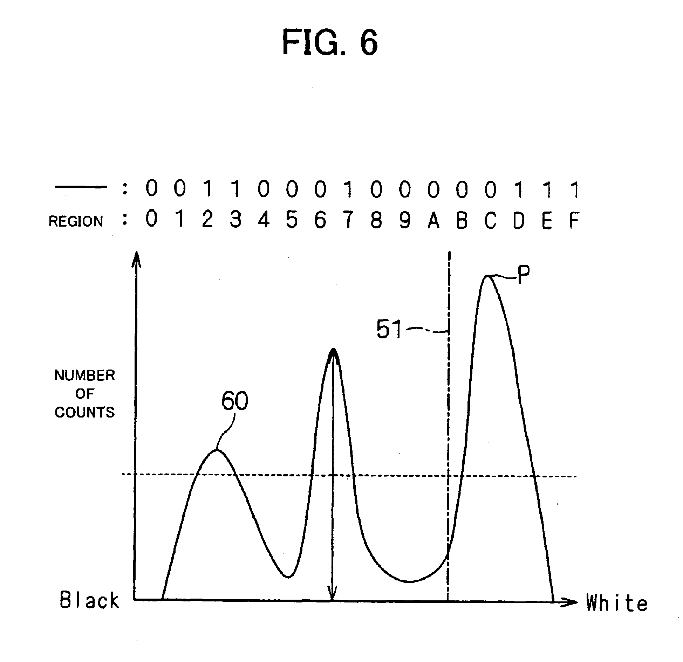

Figs. 5 and 6 show a histogram created by the luminance counter 306. Fig. 5 shows a histogram in a case where the majority of the image of the document is characters, and Fig. 6 shows a histogram in a case where the majority of the image of the document is a picture. As shown in Fig. 5, the luminance counter 306 divides the area from a black area (B side on horizontal axis in Fig. 5) to a white area (W side on horizontal axis in Fig. 5) to a predefined number (e.g., divide into sixteen areas), counts the pixels having the luminance value for every area, and creates histograms 50a, 50b.

The background color detecting unit 308 detects the white area side rather than a threshold 51 defined by a peak P detected on the white area side as the background color area with respect to the histograms 50a, 50b. The background color detected by the background color detecting unit 308 does not necessarily need to be on the white area side rather than the threshold 51. For instance, if the color of the document used in the copy machine 10 is set in advance, the threshold corresponding to the relevant color may be set.

The processing content of the ASIC 21 will be further described in detail below.

### <<Judgment of color>>

### <Hue mask>

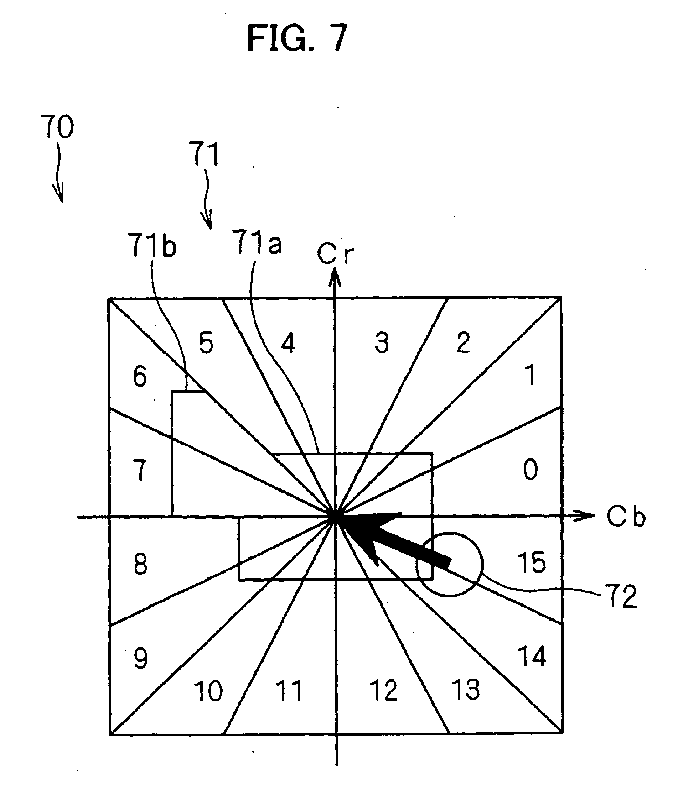

Fig. 7 is a view showing a hue mask. A hue mask 71 applies a mask 71a on an achromatic area at a center of the CbCr plane 70, where when the mask 71a is selected as a mask to be used in the block process, a mask 71b extended with respect to a area (hereinafter referred to as "background color area") from which the background color is detected is applied thereon.

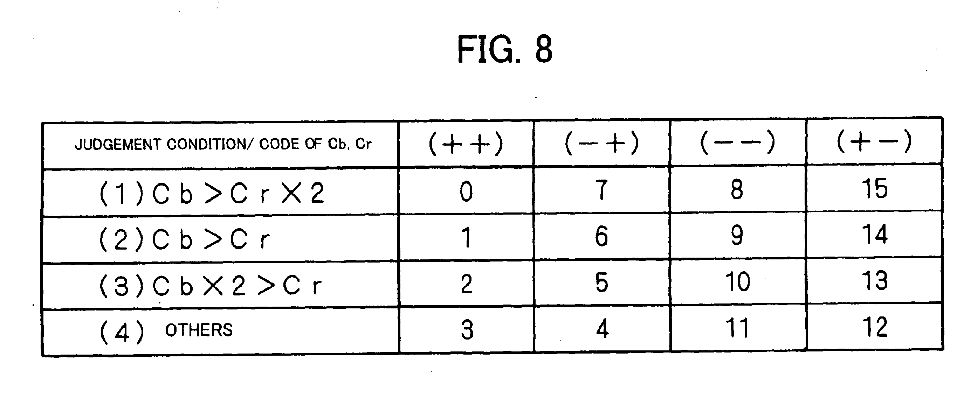

In other words, the coordinates are moved so that the center of the background color area 72 comes to the center of the CbCr plane in the block process with respect to the background color area 72 detected in the preprocessing 1 and the preprocessing 2. In this case, the mask 71b is applied to the relevant area since the achromatic center of before the coordinate movement moves to a area on the outer side of the mask 71a. The division of area in the CbCr plane follows a area division table shown in Fig. 8.

### <Background color mask>

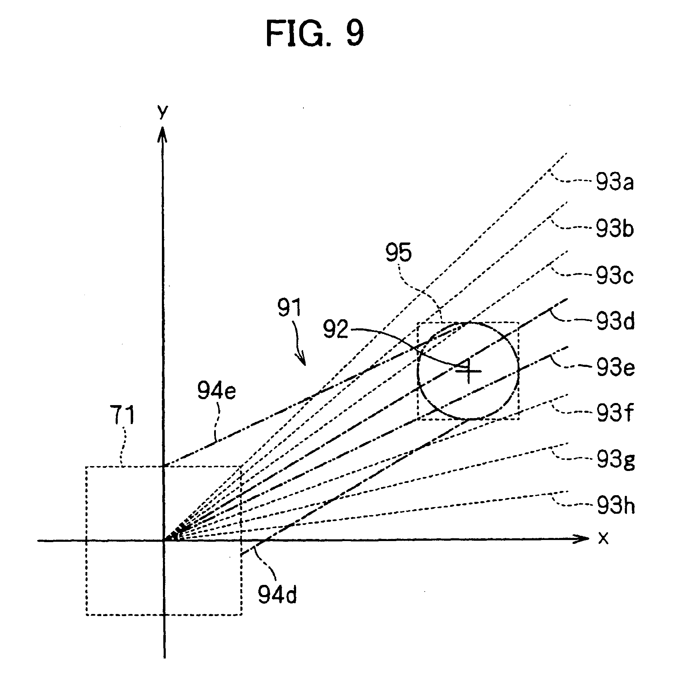

Fig. 9 is a view showing a background color mask. The background color mask 91 is used in the block process by selecting the background color mask 91 when a background color is detected, similar to the hue mask 71. The background color mask 91 is used with the hue mask 71, and is judged with respect to the background color detected in the preprocessing 1 and the preprocessing 2. That is, (1) Set the larger absolute value of the center coordinate 92 of the background color as the x axis and the smaller one as the y axis. (2) Detect a area where the center coordinate 92 exists out of areas of lines 93a to 93h having a slope of one eighth interval from y = x/8 to y = x. (3) Draw a line 94d parallel to the line (line 93d in Fig. 9) one above the center coordinate 92 of the background color towards the hue mask 71 from the center coordinate of x and the coordinate of minimum value of y of the area of the background color. The area on the upper side (+ y direction) of the line 94d and the upper side including the hue mask 71 is set as the mask area.

(4) Similar to (3), draw a line 94e parallel to the line (line 93e in Fig. 9) one below the center coordinate 92 of the background color towards the hue mask 71 from the center coordinate of x and the coordinate of maximum value of y of the area of the background color. The area on the lower side (-y direction) of the line 94e and in which the x coordinate is greater than or equal to zero is set as the mask area. (5) Assume a area with a area in which the two mask areas set in (3) and (4) overlap and a square area 95 surrounded by the maximum value and the minimum value of the x, y coordinates of the area of background color as the background color mask 91.

The point on the boundary of the mask is judged as being within the mask, and a margin can be added to the range of each mask. As opposed to the hue mask 71, the color of each area will not shift to another area since the origin is not moved in the background color mask 91.

### <Zero area mask>

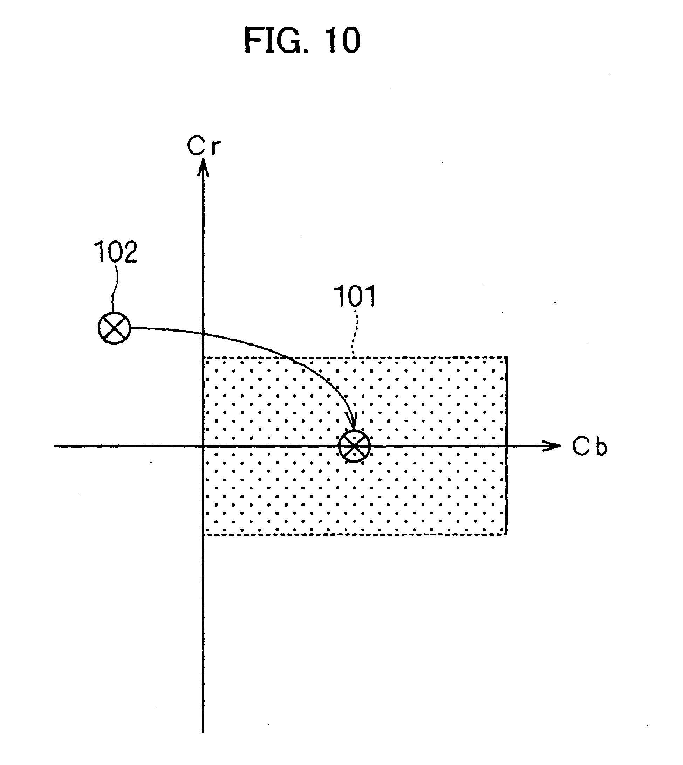

Fig. 10 is a view showing a zero area mask. A zero area mask 101 can be set as the mask in addition to the hue mask 71 and the background color mask 91 described above. The zero area mask 101 is a mask for having the area covered by the zero area mask 101 as achromatic in a area where Cb is positive. When the area 102 of the background color is specified, the area 102 is rotated by the matrix on the CbCr plane and moved to the zero area mask 101, so that the area 102 of the background color is judged as achromatic. This mask can be used with other masks (hue mask 71 and background color mask 91 in the embodiment). The mask is also effective in both the preprocessing and/or block process.

### <Judgment of luminance>

Each threshold of luminance in the block process is judged from the range of luminance of the background color of the preprocessing. A default value defined in advance is applied if the background color detection is turned OFF.

### <Preprocessing 1>

In the preprocessing 1, the luminance area is divided into sixteen areas, the area having the greatest number of counts is detected and the relevant area is judged as the background color area. The area of the background color is roughly judged by detecting the area having the greatest number of counts since the distribution of luminance of the background color of the document might possibly extend over a wide range or across two areas depending on the type etc. of the document. However, if the number of counts does not meet the first background color judgment threshold, determination is made that the number of counts sufficient to determine as the background color is not obtained, and a flag GBGF (Gray Back Ground Fail) is set.

### <Preprocessing 2>

In the preprocessing 2, when the number of counts exceeds a value set in advance in the register with respect to the area including the area around the area having the greatest number of counts in the preprocessing 1, the luminance in the relevant area thereafter becomes the target of maximum and minimum value recorded in the extremum recording unit 307. It should be noted that the recording is carried out after the number of counts exceeds, and the extremum of the relevant area up to then is not recorded. The extremum recording of CbCr in the background color of the color is carried out only when the luminance is in the background color luminance area. If the maximum count value does not meet one fourth of the maximum value of the number of counts in the preprocessing 1, the number of counts is assumed to be lacking, and the background color judgment error GBGF is set. The presence of achromatic background color is determined from the luminance of the background color.

### <Error processing>

Even after the preprocessing 1, 2 are terminated, a BPSE (Block Process Start Enable) flag stored in the register is turned to 0 (OFF), and is turned to 1 (ON) after the preprocessing 2 is terminated. At this point, if at least one error status flat is set, the number of processing lines is assumed to have not yet reached the block process start line, and the block process is started when the error is resolved (block process start line is reached) in the subsequent process. If the error status is not set (number of processing lines has already reached the block process start line), the block process is started from the relevant line.

That is, in an error occurring state, the subsequent image processing is not started assuming that the background color is not determinable, and in an error non-occurring state, the subsequent image processing is started based on the judgment result assuming that the background color is determinable.

The error status assumed to be generated at the point the preprocessing 2 is terminated is an error related to the setting of the background color area, and when the following flags are set. In other words; (1) CBGF (Color Black Ground Fail) : flag indicating that the presence of the background color of color cannot be judged, where the CBGF flag is set when the number of counts of the background color exceeds the first background color threshold but does not exceed the second background color threshold in the preprocessing 1, that is, when the achromatic color is detected but the background color is not detected.

(2) GBGF (Gray Back Ground Fail): flag indicating that the presence of the background color of gray cannot be judged, where the GBGF flag is set when the number of counts of the background color does not exceed the minimum number of counts in the preprocessing 1 or does not exceed one fourth of the number of counts of the background color of the preprocessing 1 in the preprocessing 2, that is, when the number of counts sufficient for the judgment is not obtained.

(3) BGMF (Back Ground Mask Fail) : flag indicating that the background color is detected but the relevant area spread in excess and the formation of the background color mask failed, where the BGMF flag is set when, at the distribution range (maximum value and minimum value of CbCr) of the background color collected in the preprocessing 2, the center is on the outer side of the hue mask and the movement coefficient of the maximum value of y or the minimum value of the movement coefficient of y is greater than half the movement coefficient of x. (4) MMUD (Max Min UnDetected) : flag indicating that the maximum value/minimum value is not detected although the background color is detected is set.

When the above flags are set, the threshold etc. necessary for the judgment are reset assuming that the image type of the document is not determinable. Specifically, if the error flag CBGF is set, the second background color threshold is set to a value lower than a predetermined value stored in the register. If the GBGF flag is set, the number of minimum counts of the background color to be counted in the preprocessing 1 is set low, or the number of counts sufficient for the judgment is set low in the preprocessing 2. If the BGMF flag is set, the type of the hue mask is selected or the size of the hue mask is set. If the MMUD flag is set, setting is made so that the processing related to the background color is not performed.

When the error is resolved by such setting and an error non-occurring state is obtained, the block recording unit 311 sets the BPSE flag to 1, and starts the block process or the subsequent image processing. In the present embodiment, the background color re-judgment is performed if the background color cannot be judged. If the background color again cannot be judged in the background color re-judgment, the background color re-judgment is again performed. The number of background color re-judgment is defined in advance, where the process is interrupted and assumed as an error if the background color cannot be judged even after the background color re-judgment is performed for the relevant number of times.

### <Block process>

In each block (first block process area 43, second block process area 44, ...), with respect to the block having a high possibility of being gray from the distribution of luminance, data serving as a criterion of decision in determining whether or not the block is gray is recorded. First, as a tendency in distribution (see Fig. 5) of luminance of the document of monochrome character, the gray portion is stabilized regardless of the luminance, and a peak appears in the number of counts of the all black area corresponding to the concentration of character (histogram 50a). There is a tendency in that the number of counts is small with respect to the maximum value of gray even if the peak does not exist (histogram 50b). There is also a tendency in that the proportion of all black in the entire body is relatively low.

Recordation is made as a gray block when either of the following two conditions is satisfied. That is, (1) if a flag is set in a area in which the maximum number of counts in the area excluding the area where the number of counts of each area is one step darker than the background color (area B in Fig. 5) to the all white area (area 0) exceeds the minimum number of counts, and exceeds the number of counts obtained by multiplying a predefined coefficient (e.g., 0.5 in the present embodiment) on the maximum number of counts, a flag is not set in the area (area 1) darker than the area set in advance in the register (case of histogram 50b). (2) The gray count of the block exceeds the gray count threshold (first threshold) defined in advance.

For instance, when creating the histogram 61 as shown in Fig. 6, condition (2) is not satisfied since the gray count of the block does not exceed the gray count threshold. However, since the background color area is area D, if the flag is set in a area (areas 2, 3, 7) exceeding the number of counts obtained by multiplying one half to the area 7 having greatest number of counts in the areas 0 to B excluding the areas C to F from the luminance judgment, the flag is not set in area 1, and thus the condition (1) is satisfied.

Therefore, the process corresponding to the judgment unit of the present invention is performed with the cooperation of the background color mask unit 304 to the block recording unit 311.

In the block process, a bright point block detection and a non-blank block detection are performed in addition to the judgment of the gray block. The number of blocks is counted by a bright point block counter in a case of bright point, and is recorded in an end block blank check in a case of non-blank block.

### <Operation of copy machine 10>

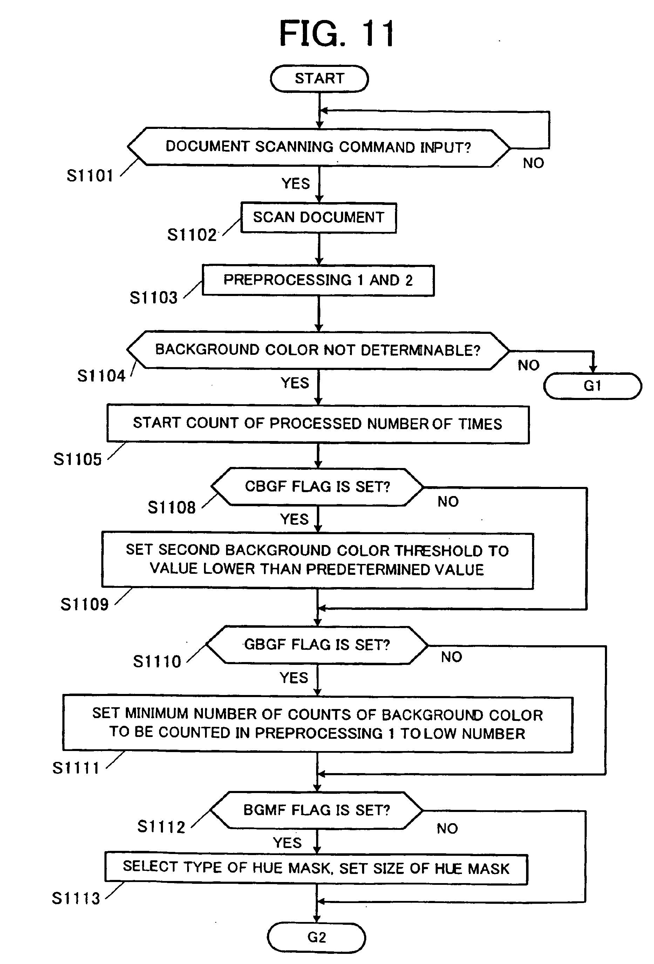

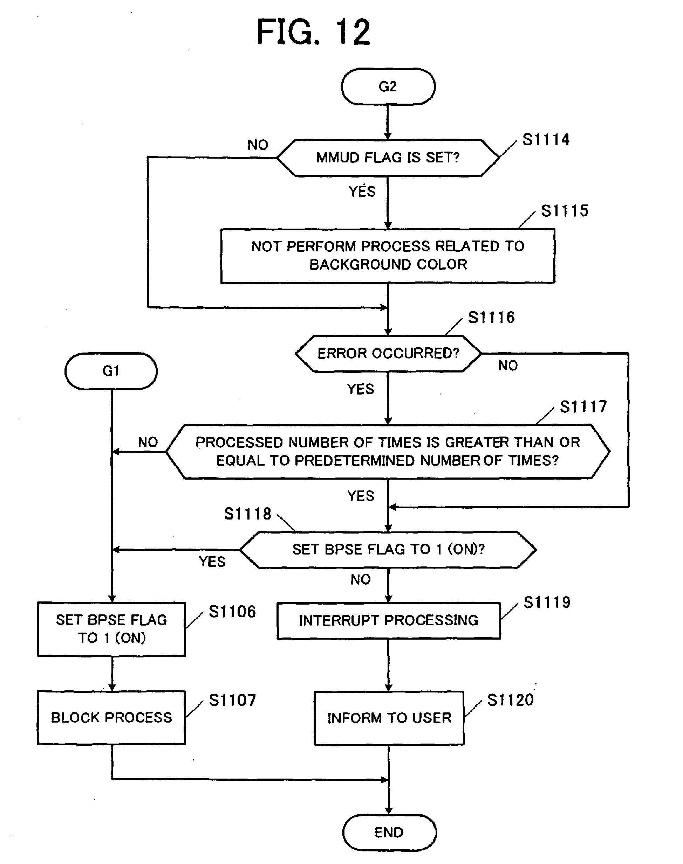

The copy machine 10 performs the following operation by being configured as above. Figs. 11 and 12 are flowcharts showing the judgment procedure of the image type. In the flowchart, only the processing operation for the copy machine 10 to judge the image type is shown, and illustration and description of other processing operations are omitted. Unless stated otherwise, a series of processing operations in the copy machine 10 are automatically performed under the control of the MPU 23.

First, the copy machine 10 is in standby until a document scanning command for scanning the document 40 placed on the document tray 14 by the user is input with the power of the copy machine 10 turned ON (step S1101). When the document scanning command is input, Yes is selected in step S1101, and the document 40 placed on the document tray 14 is scanned (scanning process: step S1102). When the document 40 is scanned in step S1102, preprocessing 1 and preprocessing 2 are executed in the preprocessing 1 area 41 and the preprocessing 2 area 42 (step S1103). If the background color is not determinable at the point the preprocessing 2 is terminated, Yes is selected in step S1104 and count of the processed number of times is started (step S1105). If the background color is determinable at the point the preprocessing 2 is terminated (select No in step S1104), the BPSE flag is set to 1 (ON) (step S1106), and the block process is performed (step S1107).

When the count of the processed number of times is started in step S1105, determination is made on whether or not the CBGF flag is set (step S1108), where if Yes is selected, the second background color threshold stored in the register is set to a value lower than a predetermined value (step S1109). Determination is then made on whether or not the GBGF flag is set (step S1110), where if Yes is selected, the minimum number of counts of the background color to be counted in the preprocessing 1 is set low (step S1111). Determination is also made on whether or not the BGMF flag is set (step S1112), where if Yes is selected, the type of the hue mask is selected or the size of the hue mask is set (step S1113). Determination is further made on whether or not the MMUD flag is set (step S1114), where if Yes is selected, setting is made so that the process related to the background color is not performed (step S1115). If No is selected in steps S1108, S1110, S1112, and S1114, steps S1109, S1111, S1113, and S1115 are skipped.

After executing steps S1108 to S1115, re-judgment is performed to determine whether or not an error has occurred (step S1116), where Yes is selected if error has not occurred, and determination is made on whether or not the background color process is performed for a predetermined number of times (step S1117) . If No is selected in step S1116 (i.e., error has occurred as a result of re-judgment), step S1117 is skipped.

If Yes is selected in step S1117 (i.e., if processed for greater than or equal to a predetermined number of times), determination is made on whether or not to command start of subsequent image processing, that is, whether or not to turn the BPSE flag to 1 (ON) (step S1118). If No is selected in step S1117 (i.e., not yet reached the predetermined number of times), step S1118 is skipped, and the BPSE flag is turned to 1 (ON) (step S1106) to start the block process (step S1107).

If No is selected in step S1118 (i.e., BPSE flag remains at 0 (OFF), the process is interrupted in step S1119, the user is informed (step S1120), and the process is terminated.

Based on the block process of step S1107, the printing unit 16 transfers the image data of the document 40 to the recording paper conveyed from the recording paper cassette 17, or records the same in a memory unit (not illustrated).

### <Effect>

Therefore, the background color of the document 40 is judged, the threshold etc. is reset prior to image processing when the judgment result is not determinable, and re-judgment is performed, whereby the background color of the document 40 can be judged without increasing the memory capacity and performing the pre-scan and the like, and the process corresponding to the judgment result can be performed.

Furthermore, the background color of the document 40 is judged in the preprocessing 1 area 41 and the preprocessing 2 area 42 (first area), and when the judgment result is not determinable, re-judgment is performed in the area (second area) after the first block processing area 43, whereby the background color can be judged without increasing the memory capacity and performing the pre-scan and the like. The judgment can be made in a shorter period of time compared to when setting the area along the main scanning direction of the scanning unit 13.

The user of the copy machine 10 is informed after detecting that the ASIC 21 has first judged as not determinable, and thus the user can be alerted when a document which background color is hard to judge is scanned.

The informing unit 19 informs the user of the copy machine 10 when judgment is not possible even after the background color judgment is performed for a predefined number of times after the ASIC has first judged as not determinable, and thus the user is rapidly alerted when a document which background color is hard to judge is scanned. Elapsed time may be used in place of the number of times.

The user of the copy machine 10 is informed when judgment is not possible even after the predefined number of areas are processed by the ASIC 21, and thus the user is rapidly alerted when a document which background color is hard to judge is scanned.

The background color to be judged by the ASIC 21 is one of color, gray, or blank, and thus the image processing corresponding to each background color can be performed.

The background color of the document 40 can be judged and the process corresponding to the judgment result can be performed without increasing the memory capacity and performing pre-scan and the like since the background color of the document 40 is judged, and the subsequent images are processed according to the judgment result.

### <Variations>

The embodiment of the present invention has been described above, but the present invention is not limited to the above embodiment. For instance, a case of scanning the document with the scanning unit 13 has been described in the embodiment, but the ASIC 21 may perform image processing after the matrix transformation unit 303 is transformed into the YCbCr colorimetric system based on the RAW data of the RGB colorimetric system scanned from the digital camera etc. The image file of Joint Photographic Experts Group (JPEG) format may be received from a personal computer (PC) etc., the image file may be decoded, the YCbCr may be retrieved, and the ASIC 21 may perform image processing thereafter.

In the above embodiment, a case where the informing unit 19 informs the start timing of the block process to the user when the BPSE flag is not turned to 1 (ON) even after retry is performed for a predetermined number of times after judging that the background color is not determinable has been described, but if the BPSE flag is turned 1 (ON) and the position the block process is started is delayed from the start position defined in advance, the coordinate at which the block process is started can be recorded to calculate the delay. This can be a criterion in deciding the handling such as validating the processed block if the data loss due to delay of the block process is small, and invalidating the processed block if the loss is large.

The present invention is not limited to the copy machine 10, and may be a scanner or a facsimile, or a multifunction peripherals (MFP) combining the same. The present invention may also be a wired logic circuit capable of performing the above described processes, and is not limited to each process described above.

## Claims

1. An image processing device including
a scanning unit (13) for scanning a document,
a memory unit that stores a threshold, a minimum number of counts of the background color and a size of a hue mask necessary for background color judgment of the document scanned by the scanning unit (13),
a judgment unit (304, 305, 307, 308 and 311) that judges a background color of the document based on the threshold, the minimum number of counts of the background color and the size of the hue mask stored in the memory unit,
an image processing unit (21) that performs subsequent image processing according to a judgment result of the judgment unit, and
a threshold resetting unit (309 and 310),
wherein prior to the image processing and on the condition that the judgment result of the judgment unit is not determinable the threshold resetting unit (309 and 310) resets the threshold to a value lower than a predetermined value, resets the minimum number of counts of the background color to a value lower than a predetermined value, and changes the size of the hue mask, and
wherein the judgment unit re-judges the background color of the document based on the reset threshold, the reset minimum number of counts of the background color, and the changed hue mask.

2. The image processing device according to claim 1, wherein the image processing unit includes a background color mask processing unit (304) that masks the background color.

3. The image processing device according to claim 1, wherein the judgment unit judges the background color of the document in a first area (41) defined in advance along a sub-scanning direction of the scanning unit, and wherein the judgment unit re-judges the background color in a second area (42) defined in advance along the sub-scanning direction of the scanning unit on condition that the judgment result is not determinable.

4. The image processing device according to claim 1, further comprising an informing unit (19) detects that the judgment unit has first judged as not determinable, and informing a user of the image processing device.

5. The image processing device according to claim 4, wherein the informing unit (19) informs the user of the image processing device as not determinable on condition that judgment is not possible even after a predefined time has elapsed from when first judged as not determinable by the judgment unit.

6. The image processing device according to claim 4, wherein the informing unit (19) informs the user of the image processing device when judgment is not possible even after a predefined number of areas is processed by the judgment unit.

7. The image processing device according to claim 1, wherein the background color to be judged is one of color, gray or blank.

8. An image processing method including a scan step (S1102) for scanning a document, a judgment step (S1108, S1110, S1112 and S1114) for judging a background color of the document scanned in the scanning step, and an image processing step (S1107) for performing image processing according to a judgment result of the judgment step;
wherein the method comprises the following steps when the judgment result is not determinable in the judgment step:
resetting (S1109) a threshold necessary for background color judgment to a value lower than a predetermined value,
resetting (S111) a minimum number of counts of the background color necessary for background color judgment to a value lower than a predetermined value,
changing (S1113) a size of a hue mask necessary for background color judgment, and
re-judging (S1108, S1110, S1112) the background color of the document based on the reset threshold, the reset minimum number of counts of the background color, and the changed hue mask.

## Patentansprüche

1. Eine Bildverarbeitungsvorrichtung, die folgende Merkmale aufweist:
eine Abtasteinheit (13) zum Abtasten eines Dokuments,
eine Speichereinheit, die eine Schwelle, eine minimale Anzahl an Zählwerten der Hintergrundfarbe und eine Größe einer Farbtonmaske, die zur Hintergrundfarbbeurteilung des Dokuments, das durch die Abtasteinheit (13) abgetastet wird, nötig ist, speichert,
eine Beurteilungseinheit (304, 305, 307, 308 und 311), die eine Hintergrundfarbe des Dokuments auf der Grundlage der Schwelle, der minimalen Anzahl an Zählwerten der Hintergrundfarbe und der Größe der Farbtonmaske, die in der Speichereinheit gespeichert sind, beurteilt,
eine Bildverarbeitungseinheit (21), die eine nachfolgende Bildverarbeitung gemäß einem Beurteilungsergebnis der Beurteilungseinheit durchführt, und
eine Schwellenrücksetzeinheit (309 und 310),
wobei vor der Bildverarbeitung und unter der Bedingung, dass das Beurteilungsergebnis der Beurteilungseinheit nicht bestimmbar ist, die Schwellenrücksetzeinheit (309 und 310) die Schwelle auf einen Wert, der niedriger ist als ein vorbestimmter Wert, rücksetzt, die minimale Anzahl von Zählwerten der Hintergrundfarbe auf einen Wert, der niedriger ist als ein vorbestimmter Wert, rücksetzt und die Größe der Farbtonmaske verändert, und
wobei die Beurteilungseinheit die Hintergrundfarbe des Dokuments auf der Grundlage der rückgesetzten Schwelle, der rückgesetzten minimalen Anzahl an Zählwerten der Hintergrundfarbe und der veränderten Farbtonmaske erneut beurteilt.

2. Die Bildverarbeitungsvorrichtung gemäß Anspruch 1, bei der die Bildverarbeitungseinheit eine Hintergrundfarbmaskenverarbeitungseinheit umfasst, die die Hintergrundfarbe maskiert.

3. Die Bildverarbeitungsvorrichtung gemäß Anspruch 1, bei der die Beurteilungseinheit die Hintergrundfarbe des Dokuments in einem ersten Bereich (41), der zuvor entlang einer Teilabtastrichtung der Abtasteinheit definiert wird, beurteilt, und bei der die Beurteilungseinheit die Hintergrundfarbe in einem zweiten Bereich (42), der zuvor entlang der Teilabtastrichtung der Abtasteinheit definiert wird, unter der Bedingung, dass das Beurteilungsergebnis nicht bestimmbar ist, erneut beurteilt.

4. Die Bildverarbeitungsvorrichtung gemäß Anspruch 1, die ferner eine Informierungseinheit (19) aufweist, die erfasst, wenn die Beurteilungseinheit zuerst eine Nichtbestimmbarkeit beurteilt, und einen Benutzer der Bildverarbeitungsvorrichtung informiert.

5. Die Bildverarbeitungsvorrichtung gemäß Anspruch 4, bei der die Informierungseinheit (19) den Benutzer der Bildverarbeitungsvorrichtung unter der Bedingung über eine Nichtbestimmbarkeit informiert, dass eine Beurteilung nicht einmal möglich ist, nachdem eine vorbestimmte Zeit seit der ersten Beurteilung einer Nichtbestimmbarkeit durch die Beurteilungseinheit verstrichen ist.

6. Die Bildverarbeitungsvorrichtung gemäß Anspruch 4, bei der die Informierungseinheit (19) den Benutzer der Bildverarbeitungsvorrichtung informiert, wenn eine Beurteilung selbst dann nicht möglich ist, nachdem eine vordefinierte Anzahl von Bereichen durch die Beurteilungseinheit verarbeitet wurde.

7. Die Bildverarbeitungsvorrichtung gemäß Anspruch 1, bei der die zu beurteilende Hintergrundfarbe entweder farbig, grau oder leer ist.

8. Ein Bildverarbeitungsverfahren, das einen Abtastschritt (S 1102) zum Abtasten eines Dokuments, einen Beurteilungsschritt (S 1108, S 1110, S1112 und S1114) zum Beurteilen einer Hintergrundfarbe des Dokuments, das bei dem Abtastschritt abgetastet wird, und einen Bildverarbeitungsschritt (S1107) zum Durchführen einer Bildverarbeitung gemäß einem Beurteilungsergebnis des Beurteilungsschritts umfasst;
wobei das Verfahren die folgenden Schritte aufweist, wenn das Beurteilungsergebnis in dem Beurteilungsschritt nicht bestimmbar ist:
Rücksetzen (S 1109) einer Schwelle, die zur Hintergrundfarbbeurteilung nötig ist, auf einen niedrigeren Wert als einen vorbestimmten Wert,
Rücksetzen (S 111) einer minimalen Anzahl an Zählwerten der Hintergrundfarbe, die zu Hintergrundfarbbeurteilung nötig ist, auf einen niedrigeren Wert als einen vorbestimmten Wert,
Verändern (S1113) einer Größe einer Farbtonmaske, die zur Hintergrundfarbbeurteilung nötig ist, und
erneutes Beurteilen (S 1108, S 1110, S 1112) der Hintergrundfarbe des Dokuments auf der Grundlage der rückgesetzten Schwelle, der rückgesetzten minimalen Anzahl an Zählwerten der Hintergrundfarbe und der veränderten Farbtonmaske.

## Revendications

1. Dispositif de traitement d'image, comportant une unité de balayage (13) destinée à balayer un document,
une unité de mémoire qui mémorise un seuil, un nombre minimum d'impulsions de la couleur de fond et une grandeur d'un masque de teinte nécessaire pour juger la couleur de fond du document balayé par l'unité de balayage (13),
une unité de jugement (304, 305, 307, 308 et 311) qui juge une couleur de fond du document sur base du seuil, du nombre minimum d'impulsions de la couleur de fond et de la grandeur du masque de teinte mémorisés dans l'unité de mémoire,
une unité de traitement d'image (21) qui effectue le traitement d'image successif selon un résultat de jugement de l'unité de jugement, et
une unité de rétablissement de seuil (309 et 310),
dans lequel, avant le traitement d'image et à la condition que le résultat de jugement de l'unité de jugement ne soit pas déterminable, l'unité de rétablissement de seuil (309 et 310) rétablit le seuil à une valeur inférieure à une valeur prédéterminée, rétablit le nombre minimum d'impulsions de la couleur de fond à une valeur inférieure à une valeur prédéterminée, et change la grandeur du masque de teinte, et
dans lequel l'unité de jugement rejuge la couleur de fond du document sur base du seuil de rétablissement, le nombre minimum d'impulsions de la couleur de fond rétabli, et le masque de teinte changé.

2. Dispositif de traitement d'image selon la revendication 1, dans lequel
l'unité de traitement d'image comporte une unité de traitement de masque de couleur de fond (304) qui masque la couleur de fond.

3. Dispositif de traitement d'image selon la revendication 1, dans lequel l'unité de jugement juge la couleur de fond du document dans une première zone (41) définie à l'avance dans une sous-direction de balayage de l'unité de balayage, et dans lequel l'unité de jugement rejuge la couleur de fond dans une deuxième zone (42) définie à l'avance dans une sous-direction de balayage de l'unité de balayage à la condition que le résultat de jugement ne soit pas déterminable.

4. Dispositif de traitement d'image selon la revendication 1, comprenant par ailleurs une unité d'information (19) qui détecte que l'unité de jugement a tout d'abord jugé comme non déterminable, et informe un utilisateur du dispositif de traitement d'image.

5. Dispositif de traitement d'image selon la revendication 4, dans lequel l'unité d'information (19) informe l'utilisateur du dispositif de traitement d'image de l'état de non déterminable à la condition que le jugement ne soit pas possible, même après que se soit écoulé un temps prédéfini à partir du moment où il a été jugé en premier lieu comme non déterminable par l'unité de jugement.

6. Dispositif de traitement d'image selon la revendication 4, dans lequel l'unité d'information (19) informe l'utilisateur du dispositif de traitement d'image lorsque le jugement n'est pas possible, même après qu'un nombre prédéfini de zones aient été traitées par l'unité de jugement.

7. Dispositif de traitement d'image selon la revendication 1, dans lequel la couleur de fond à juger est l'une parmi couleur, gris ou blanc.

8. Procédé de traitement d'image, comportant une étape de balayage (S1102) destinée à balayer un document, une étape de jugement (S1108, S1110, S1112 et S1114) destinée à juger une couleur de fond du document balayé dans l'étape de balayage, et une étape de traitement d'image (S1107) destinée à effectuer un traitement d'image selon un résultat de jugement de l'étape de jugement;
dans lequel le procédé comprend les étapes suivantes lorsque le résultat de jugement n'est pas déterminable à l'étape de jugement:
rétablir (S1109) un seuil nécessaire pour le jugement de la couleur de fond à une valeur inférieure à une valeur prédéterminée,
rétablir (S111) un nombre minimum d'impulsions de la couleur de fond nécessaire pour le jugement de la couleur de fond à une valeur inférieure à une valeur prédéterminée,
changer (S1113) une grandeur d'un masque de teinte nécessaire pour le jugement de la couleur de fond, et
rejuger (S1108, S1110, S1112) la couleur de fond du document sur base du seuil rétabli, le nombre minimum d'impulsions de la couleur de fond rétabli et le maque de teinte changé.
